# EUROPÄISCHE PATENTSCHRIFT

(11) **EP 0 518 070 B1**
(45) Veröffentlichungstag und Bekanntmachung des Hinweises auf die Patenterteilung: **19.07.1995**
(21) Anmeldenummer: 92108113.9
(22) Anmeldetag: 14.05.1992
(51) Int. Cl.: H05B 7/11

(54) **Gleichstrom-Lichtbogenofenanlage**
Direct current arc furnace facility
Installation de four à arc à courant continu

(30) Priorität: 14.06.1991 CH 1782/91
(43) Veröffentlichungstag der Anmeldung: 16.12.1992
(73) Patentinhaber: ASEA BROWN BOVERI AG, 5400 Baden (CH)
(72) Erfinder: Stenkvist, Sven-Einar, CH-5200 Brugg (CH)

(56) Entgegenhaltungen:
- DE-A- 4 035 233
- FR-A- 2 548 508
- GB-A- 2 094 119
- GB-A- 2 108 810

## Beschreibung

### TECHNISCHES GEBIET

Die Erfindung bezieht sich auf eine Gleichstrom-Lichtbogenofenanlage mit einem Gleichstrom-Lichtbogenofen, der auf einer Ofenplattform angeordnet ist, mit einem Ofengefäss, das mit einem metallischen Mantel umgeben ist, mit mindestens einer als Kathode geschalteten Elektrode und mindestens einem als Anode geschalteten Bodenkontakt, der mit mindestens einer Anschluss-Armatur versehen ist, wobei die Elektrode und der Bodenkontakt über Hochstromleitungen an eine neben dem Ofengefäss vorgesehene Stromversorgungseinrichtung angeschlossen sind.

Die Erfindung nimmt dabei Bezug auf einen Stand der Technik, wie er sich beispielsweise aus der DE-Patentschrift 2,558,879 ergibt.

### TECHNOLOGISCHER HINTERGRUND UND STAND DER TECHNIK

Bei Gleichstrom-Lichtbogenöfen hoher Leistung führen die in den Stromzu- und -ableitungen fliessenden hohen Ströme zu Ablenkungen des Lichtbogens. Das Abbrennen des Lichtbogen erfolgt nicht vertikal. Der Lichtbogen ist vielmehr gegen die Ofenwandung gerichtet und führt dort zu einer Ueberhitzung.

Durch eine besondere Führung der Hochstromleitungen unter und neben dem Ofengefäss lässt sich eine "Zentrierung" des Lichtbogens erzielen. So wird in der US-A-4,550,413 und der US-A-4,577,326 vorgeschlagen, diese Leitungen so zu verlegen, dass die durch den fliessenden Gleichstrom hervorgerufenen magnetischen Felder symmetrisch auf den Lichtbogen einwirken. Diese Massnahmen sind jedoch aufwendig und erhöhen neben den Kosten auch den Platzbedarf des Ofens. Eine andere Lösung besteht darin, die Elektrode samt Elektrodenhalterung relativ zum Ofengefäss horizontal verschiebbar zu machen, um damit Unsymmetrien in der Stromzu- und -abführung zu kompensieren. Auch diese Massnahme ist sehr aufwendig, weil im Ofendeckel entsprechend Platz für den Verfahrweg der Elektrode vorgesehen werden muss.

Aus der DE-PS 25 58 879 ist ein gleichstromgespeister Lichtbogenofen bekannt, der einen Ofentiegel mit unmagnetischem Boden aufweist. Die Badelektrode ist unsymmetrisch im Verhältnis zur Längsrichtung der Lichtbogenelektrode angeordnet. Die zur Badelektrode führenden Hochstromleitungen sind so verlegt, dass mindestens ein Leiter in einer solchen Richtung unter dem Ofentiegel verlegt ist, dass der durch ihn durchfliessende Strom im wesentlichen in entgegengesetzter Richtung zu dem Strom in der Schmelze fliesst. Um diesen Stromverlauf zu verwirklichen, müssen beim bekannten Lichtbogenofen die Hochstromleiter hoch oben am Tiegel horizontal um die Peripherie des Ofentiegels verlegt sein. Damit bilden diese Hochstromleiterabschnitte einen Teil des Ofengefässes. Bei dem heute üblichen Betrieb mit Wechselgefässen bringt dies eine Verteuerung des Gefässes mit sich. Darüber hinaus ist es aufwendig, diese Hochstromleitungen am Tiegel zu schützen.

### KURZE DARSTELLUNG DER ERFINDUNG

Der Erfindung liegt die Aufgabe zugrunde, eine Gleichstrom-Lichtbogenofenanlage zu schaffen, bei welcher mit einfachen Mitteln eine Symmetrierung des Lichtbogens erreicht wird, ohne den Platzbedarf der Anlage zu vergrössern, keine Kompensationsleiter am Ofengefäss anzubringen sind und bei welcher nach wie vor Wechselgefässe verwendet werden können.

Diese Aufgabe wird erfindungsgemäss dadurch gelöst, dass die von der Stromversorgungseinrichtung zum Bodenkontakt führenden Hochstromleitungen zum überwiegenden Teil in einer Ebene oberhalb des Ofenbodens oberhalb, an oder unterhalb der Ofenplattform verlegt sind und erst auf der der Stromversorgungseinrichtung gegenüberliegenden Seite des Ofengefässes nach unten zu den Anschluss-Armaturen am Ofenboden geführt sind.

Der Vorteil der Erfindung ist insbesondere darin zu sehen, dass ohne aufwendige Leitungsführung am, unter oder neben dem Ofengefäss sich ein nahezu symmetrischer Lichtbogen ausbildet.

Ausführungsformen der Erfindung sowie die damit erzielbaren Vorteile werden nachfolgend anhand der Zeichnung näher erläutert.

### KURZE BESCHREIBUNG DER ZEICHNUNG

In der Zeichnung ist ein Ausführungsbeispiel der Erfindung schematisch dargestellt, und zwar zeigt:
- Fig.1: einen Längsschnitt durch einen Gleichstrom-Lichtbogenofen mit schematischer Darstellung der Hochstromleitungen;
- Fig.2: eine Draufsicht auf den Ofengefässboden des Lichtbogenofens gemäss Fig.1;
- Fig.3: eine stark vereinfachte Seitenansicht einer Gleichstrom-Lichtbogenofenanlage mit einem Lichtbogenofen gemäss Fig.1, der auf einer Ofenplattform angeordnet ist, mit beidseits unter der Ofenplattform geführten Hochstromleitern;
- Fig.4: eine stark vereinfachte Draufsicht auf die Gleichstrom-Lichtbogenofenanlage gemäss Fig.3;
- Fig.5: eine stark vereinfachte Seitenansicht einer Gleichstrom-Lichtbogenofenanlage mit einem Lichtbogenofen gemäss Fig.1, der auf einer Ofenplattform angeordnet ist, mit nur auf der Abgiessseite oberhalb der Ofenplattform geführten Hochstromleitern;
- Fig.6: eine stark vereinfachte Draufsicht auf die Gleichstrom-Lichtbogenofenanlage gemäss Fig.5.

### WEGE ZUR AUSFÜHRUNG DER ERFINDUNG

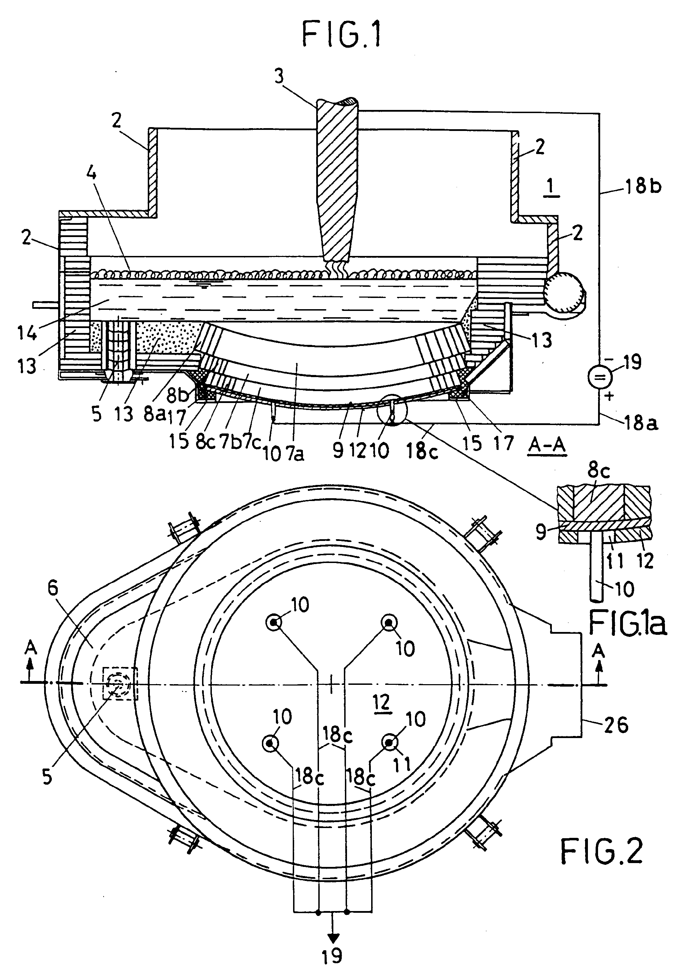

Ein Gleichstrom-Lichtbogenofen nach Fig.1 weist ein Ofengefäss 1 auf, das mit einem Mantel 2 aus Metall versehen ist. Im Ausführungsbeispiel weist der Ofen nur eine als Kathode geschaltete massive Elektrode 3 auf, doch kann diese Zahl auch zwei, drei oder mehr betragen. Unter der Elektrode 3 erhält man auf übliche Weise einen Elektrodenfleck, d.h. eine schlackenfreie Fläche der Schmelze. Der Ofen hat einen exzentrischen Bodenabstich mit einer Abstichvorrichtung 5 und einem Türloch 6. Im Ofengrund ist ein Bodenkontakt angebracht. Der Bodenkontakt besteht aus im Beispielsfall zwei Futterschichtlagen 7a, 7b Graphit- oder graphithaltigen Ziegeln 14, die auf einer kalottenförmigen Kontaktplatte 8 aufliegen. Anschluss-Armaturen 9 (Fig.2) an der Kontaktplatte 8 ragen durch Oeffnungen im Gefässboden 10 nach unten ins Freie. An die Bodenfutterschicht schliesst sich nach aussen hin die konventionelle Ofenausmauerung 11 an. Der Gefässboden 10 kann mit einer Kühleinrichtung (nicht dargestellt) versehen sein, um sie auf möglichst niedriger Temperatur zu halten. 16 ist eine Absaugöffnung für Abgase. Die Ziegel 14 der Futterschichten 7a und 7b dienen als Stromleiter zwischen der Charge 15 und der Kontaktplatte 8.
Insoweit entspricht der Gleichstrom-Lichtbogenofen dem Stand der Technik und ist beispielsweise in der US-Patentschrift 4,228,314 oder auch der DE-Patentschrift 30 22 566 ausführlich beschrieben.

Der Mantel 2 des Ofengefässes ist radial nach innen gezogen und bildet einen nach innen ragenden Kragen 15. Die Bodenplatte 10 überragt den Kragen 15 in radialer Richtung. Im Ueberlappungsbereich ist ein Ring 17 aus Isoliermaterial angeordnet. Auf diese Weise stützt sich die gesamte Bodenpartie des Ofens auf dem Kragen 15 ab. Die Bodenpartie des Ofens schwimmt quasi im Ofengefäss 1. Gleichzeitig wird über das Isoliermaterial die elektrische Isolation zwischen Ofenmantel 2 und Bodenplatte 10 und damit dem Bodenkontakt bewerkstelligt.

Die Verteilung der Anschluss-Armaturen 10 geht aus der Draufsicht auf die Unterseite des Ofengefässes 1 gemäss Fig.2 hervor. Man erkennt vier regelmässig über den Boden verteilte Armaturen 9 und die Hochstromleitungen 18a bzw. 18c zum positiven Pol der Stromversorgungseinrichtung 19. Die vom negativen Pol der Stromversorgungseinrichtung 19 zur Elektrode 3 führenden Hochstromleitungen sind mit 18b bezeichnet.

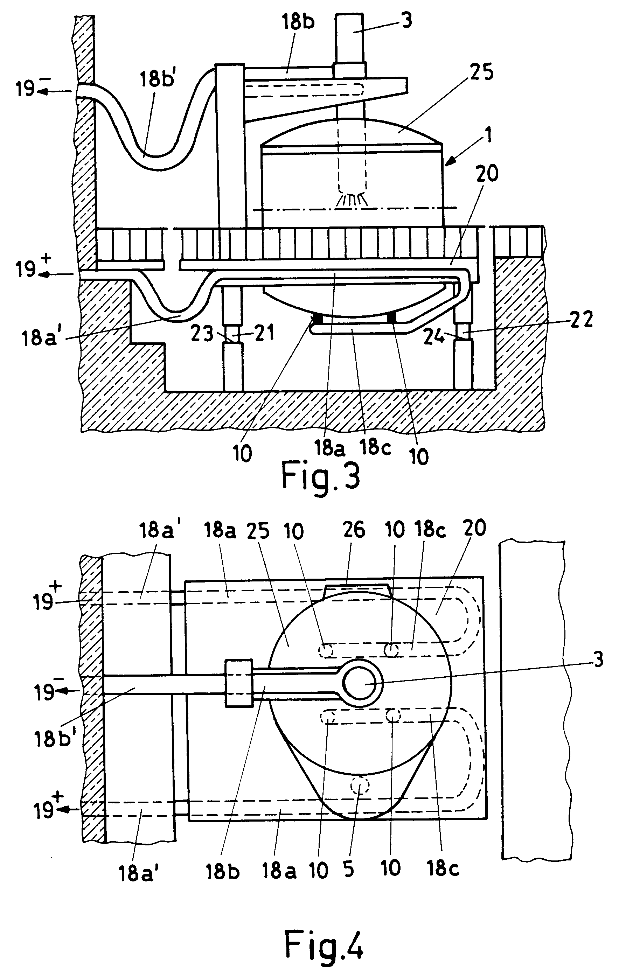

Wie aus Fig.3 und 4 bzw. Fig.5 und 6 hervorgeht, ist der Gleichstrom-Lichtbogenofen auf einer Offenplattform 20 angeordnet. Diese Plattform ist mit zwei Abwälzwiegen 21, 22 versehen, die auf Abwälzbahnen 23, 24 aufliegen. Auf diese Weise ist der Lichtbogenofen samt Ofenplattform 20 um eine Achse parallel zur Ofenlängsachse nach beiden Seiten schwenkbar. Sowohl die zur Elektrode 3 als auch zu den Anschlussarmaturen 10 am Ofenboden führenden Hochstromleitungen 18a, 18b sind am Uebergang zur Ofenplattform 20 flexibel ausgeführt. Die flexiblen Abschnitte der Hochstromleitungen 18a und 18b sind mit 18a' bzw. 18b' bezeichnet. Die von der (in Fig.3 und 4 nicht dargestellten) Stromversorgungseinrichtung 19 zu den Anschlussarmaturen 10 des Bodenkontakts führenden Hochstromleitungen 18a sind zum überwiegenden Teil in einer Ebene oberhalb des Ofenbodens unterhalb der Ofenplattform 20 verlegt. Sie sind erst auf der der Stromversorgungseinrichtung 19 gegenüberliegenden Seite des Ofengefässes nach unten zu den Anschluss-Armaturen 10 am Ofenboden geführt. Dabei sind grundsätzlich zwei Varianten für die Leitungsführung der Hochstromleitungen 18a möglich:

Bei der in Fig.3 und 4 dargestellten Variante sind zwei separate Leitungen vom postiven Pol der Stromversorgungseinrichtung 19 kommend am Rand der Ofenplattform 20 entlang verlegt. Die dabei dem Schutz der Hochstromleitungen 18a dienenden Rohre (nicht in Fig.3 und 4 eingezeichnet) können dabei in die Konstruktion der Ofenplattform 20 integriert werden. Auf der der Stromversorgungseinrichtung 19 gegenüberliegenden Seite der Ofenplattform 20 verlaufen sie zunächst in gleicher Ebene aufeinander zu und gehen dann in schräg nach unten verlaufende Leitungsabschnitte über, deren Enden an die Anschluss-Armaturen 10 am Ofenboden angeschlossen sind.

Die auf der der Stromversorgungseinrichtung 19 abgewandten Seite des Ofens verlaufenden Abschnitte 18c, welche zunächst nach unten und dann unter dem Ofenboden zurück in Richtung der an der Ofenplattform 20 verlaufenden Leitrabschnitte 18a zu den Anschluss-Armaturen 10 führen, erzeugen dabei ein Magnetfeld, das der Ablenkung des Lichtbogen entgegenwirkt und damit den Verschleiss von Ofenwand und Ofendeckel vermindert. Die an der Ofenplattform 20 horizontal verlaufenden Abschnitte 18a der Hochstromleitungen bewirken zwar eine Ablenkung des Lichtbogens, doch ist diese ablenkende Wirkung ist umso geringer, je höher die in der Ebene oberhalb des Ofenbodens verlaufenden Abschnitte der Hochstromleitungen 18a relativ zum Ofenboden verlegt sind. Optimal wäre dabei die Verlegung in die Ebene der Lichtbogens bei vollem Ofen (angedeutet in Fig.3 durch die strichpunktierte Linie). Bei der praktischen Ausführung ist jedoch zu bedenken, dass die Hochstromleitungen 18a gegenüber den beim Lichtbogenofenbetrieb herrschenden extremen Betriebsbedingungen geschützt werden müssen. Dies gilt sowohl für den Bereich der Ausgiessvorrichtung 5 als auch und insbesondere für den Bereich der Schlackentüre 26. Sofern wirtschaftlich und technisch vertretbar, können bei einer Lichtbogenofenanlage nach Fig.3 bzw. 4 die besagten Abschnitte der Hochstromleitungen 18a oberhalb der Ofenplattform 20 verlegt werden, wozu es einer separaten Trageinrichtung und entsprechender Schutzmassnahmen bedarf.

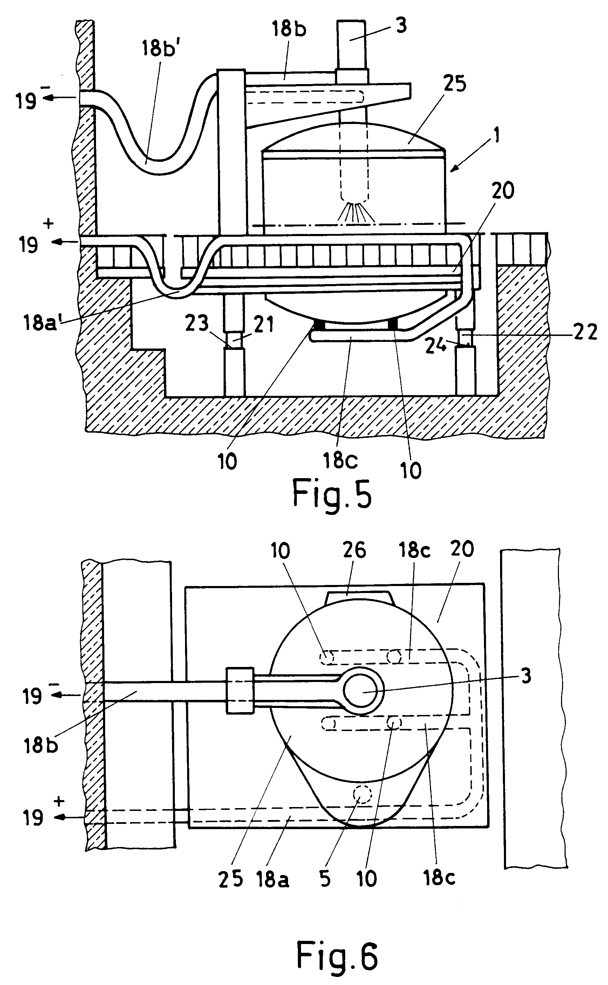

Eine andere Möglichkeit, die in Bezug auf ihre elektromagnetischen Eigenschaften nur wenig unwirksamer ist, sich jedoch wirtschaftlicher durchführen lässt, ist in Fig.5 bzw. 6 beispielsweise verdeutlicht. Dort führt eine (oder mehrere parallelgeschaltete) Hochstromleitung 18a vom positiven Pol der Stromversorgungseinrichtung 19 nur auf der Ausgiess-Seite der Ofenplattform 20 an das der Stromversorgungseinrichtung 19 gegenüberliegenden Ende des Lichtbogenofens, biegt dann nach innen zur Mitte der Ofenplattform ab und verzweigt sich auf der Höhe des ersten Anschluss-Armaturenpaars 10. Die beiden Zweige sind dann mit den Armaturen 10 verbunden. Die Leitungsführung auf der Ofenplattform ist dabei so gewählt, dass diese Abschnitte der Hochstromleitung 18a vorzugsweise in einer Ebene verlaufen, die annähernd der in der Brennebene des Lichtbogens bei voller Chargierung entspricht. Das von diesen Leiterabschnitten hervorgerufene Magnetfeld verläuft im Bereich des Lichtbogens im wesentlichen vertikal und bewirkt keine störende Ablenkung des Lichtbogens. Wenn auch die Leitungsführung auf der Abstichseite der Ofenplattform 20 als die geeignetste erscheint, so kann die Hochstromleitung 18a auch auf der Seite der Schlackentüre 26 geführt werden, ohne dass sich der beabsichtigte Kompensationseffekt ändert.

Den vorstehend beschriebenen Ausführungsbeispielen lag eine Gleichstrom-Lichtbogenofenanlage klassischer Bauart zugrunde, d.h. eine Anordnung, bei welcher die Stromversorgungseinrichtung seitlich in Richtung der Kippachse des Ofengefässes angeordnet ist und sowohl die zum positiven als auch zum negativen Pol der Stromversorgungseinrichtung 19 führenden Hochstromleitungen 18a, 18b und die zugehörigen flexiblen Abschnitte 18a' und 18b' mehrheitlich parallel zur Kippachse des Lichtbogenofens verlaufen.

Die Erfindung wurde im vorstehenden anhand einer Ofenkonstruktion beschrieben, bei welcher der Bodenkontakt zumindest teilweise aus elektrisch leitenden Ziegeln besteht, die auf einer Kontaktplatte ruhen, welche Kontaktplatte ihrerseits auf einer Bodenplatte aufliegt. Selbstverständlich beschränkt sich die Erfindung nicht auf derartige Ofentypen. Sie kann, ohne den durch sie gesetzten Rahmen zu verlassen, auch auf Gleichstrom-Lichtbogenöfen angewandt werden, bei denen der Bodenkontakt durch eine Vielzahl vertikal auf der Bodenplatte befestigter Metallstäbe besteht. Auch kann der Bodenkontakt mit weniger oder auch mehr als vier Anschluss-Armaturen versehen sein.

## Patentansprüche

1. Gleichstrom-Lichtbogenofenanlage mit einem Gleichstrom-Lichtbogenofen, der auf einer Ofenplattform (20) angeordnet ist, mit einem Ofengefäss (1), das mit einem metallischen Mantel (2) umgeben ist, mit mindestens einer als Kathode geschalteten Elektrode (3) und mindestens einem als Anode geschalteten Bodenkontakt (9), der mit mindestens einer Anschluss-Armatur (10) versehen ist, wobei die Elektrode und der Bodenkontakt über Hochstromleitungen (18b,18a,18c) an eine neben dem Ofengefäss vorgesehene Stromversorgungseinrichtung (19) angeschlossen sind, dadurch gekennzeichnet, dass die von der Stromversorgungseinrichtung (19) zum Bodenkontakt (9) führenden Hochstromleitungen (18a) zum überwiegenden Teil in einer Ebene oberhalb des Ofenbodens oberhalb, an oder unterhalb der Ofenplattform (20) verlegt sind und erst auf der der Stromversorgungseinrichtung (19) gegenüberliegenden Seite des Ofengefässes (1) nach unten zu den Anschluss-Armaturen (10) am Ofenboden geführt sind.

2. Lichtbogenofenanlage nach Anspruch 1, dadurch gekennzeichnet, dass vom positiven Pol der Stromversorgungseinrichtung je eine Hochstromleitung (18a) seitlich parallel zur Kippachse des Ofens an der Ofenplattform (20) entlanggeführt ist.

3. Lichtbogenofenanlage nach Anspruch 1, dadurch gekennzeichnet, dass die vom positiven Pol der Stromversorgungseinrichtung (19) kommende Hochstromleitung (18a) nur auf der Ausgiess-Seite der Ofenplattform (20) verläuft.

4. Lichtbogenofenanlage nach Anspruch 1, dadurch gekennzeichnet, dass vom positiven Pol der Stromversorgungseinrichtung (19) je eine Hochstromleitung (18a) seitlich an der Ofenplattform (20) und senkrecht zur Kippachse des Ofens geführt ist.

5. Lichtbogenofenanlage nach einem der Ansprüche 1 bis 4, dadurch gekennzeichnet, dass die Hochstromleitungen (18a) in einer Ebene an oder über der Ofenplattform (20) verlegt sind, die annähernd mit derjenigen übereinstimmt, in welcher der Lichtbogen bei voller Chargierung brennt.

## Claims

1. Direct-current arc furnace plant comprising a direct-current arc furnace which is disposed on a furnace platform (20) and comprises a furnace vessel (1) surrounded by a metal shell (2), at least one electrode (3) connected as cathode and at least one bottom contact (9) connected as anode and provided with at least one connection fitting (10), the electrode and the bottom contact being connected via high-current lines (18b, 18a, 18c) to a current supply means (19) disposed alongside the furnace vessel, characterized in that the high-current lines (18a) leading from the current supply means (19) to the bottom contact (9) are laid for the major part in a plane above the furnace bottom, above, on or below the furnace platform (20), and are taken downwards to the connection fittings (10) on the furnace bottom only on the side of the furnace vessel (1) opposite the current supply means (19).

2. Arc furnace plant according to Claim 1, characterized in that in each case one high-current line (18a) from the positive pole of the current supply means is guided laterally along the furnace platform (20) parallel to the tipping axis of the furnace.

3. Arc furnace plant according to Claim 1, characterized in that the high-current line (18a) coming from the positive pole of the current supply means (19) extends only on the pouring side of the furnace platform (20).

4. Arc furnace plant according to Claim 1, characterized in that in each case one high-current line (18a) from the positive pole of the current supply means (19) is guided laterally on the furnace platform (20) and at right angles to the tipping axis of the furnace.

5. Arc furnace plant according to one of Claims 1 to 4, characterized in that the high-current lines (18a) are laid on or above the furnace platform (20) in a plane which corresponds approximately to that in which the arc burns with a full charge.

## Revendications

1. Installation de four à arc à courant continu avec un four à arc à courant continu, qui est disposé sur une plate-forme de four (20), avec un récipient de four (1), qui est entouré par une enveloppe métallique (2), avec au moins une électrode (3) raccordée en cathode et au moins un contact de fond (9) raccordé en anode, qui est pourvu d'au moins une armature de raccordement (10), l'électrode et le contact de fond étant raccordés par des lignes à courant fort (18b, 18a, 18c) à un dispositif d'alimentation en courant (19) prévu à côté du récipient de four, caractérisée en ce que les lignes à courant fort (18a) conduisant du dispositif d'alimentation en courant (19) au contact de fond (9) sont, en majeure partie, posées dans un plan situé au-dessus du fond du four, au-dessus, au niveau ou en dessous de la plate-forme de four (20) et ne sont conduites vers le bas, vers les armatures de raccordement (10) au fond du four, que sur le côté du récipient de four (1) opposé au dispositif d'alimentation en courant (19).

2. Installation de four à arc suivant la revendication 1, caractérisée en ce qu'une ligne à courant fort (18a) est menée de chaque côté le long de la plate-forme de four (20), parallèlement à l'axe de basculement du four, depuis la borne positive du dispositif d'alimentation en courant.

3. Installation de four à arc suivant la revendication 1, caractérisée en ce que la ligne à courant fort (18a) venant de la borne positive du dispositif d'alimentation en courant (19) n'est placée que sur le côté de coulée de la plate-forme de four (20).

4. Installation de four à arc suivant la revendication 1, caractérisée en ce qu'une ligne à courant fort (18a) est menée de chaque côté de la plate-forme de four (20) et perpendiculairement à l'axe de basculement du four, depuis la borne positive du dispositif d'alimentation en courant (19).

5. Installation de four à arc suivant l'une des revendications 1 à 4, caractérisée en ce que les lignes à courant fort (18a) sont posées dans un plan situé au niveau de ou au-dessus de la plate-forme de four (20), qui coïncide approximativement avec celui dans lequel jaillit l'arc à pleine charge.
